(19) Europäisches Patentamt
European Patent Office
Office européen des brevets

(11) **EP 4 783 480 A1**

(12) **EUROPEAN PATENT APPLICATION**
published in accordance with Art. 153(4) EPC

(43) Date of publication:
**29.07.2026 Bulletin 2026/31**

(21) Application number: **24880002.1**

(22) Date of filing: **27.09.2024**

(51) International Patent Classification (IPC):
*H04B 7/0456* (2017.01)    *H04B 7/06* (2006.01)
*H04W 72/1273* (2023.01)    *H04W 64/00* (2009.01)
*H04L 5/00* (2006.01)

(52) Cooperative Patent Classification (CPC):
**H04B 7/0456; H04B 7/06; H04L 5/00; H04W 64/00;
H04W 72/1273**

(86) International application number:
**PCT/KR2024/014796**

(87) International publication number:
**WO 2025/084663 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.10.2023  KR 20230139954
22.11.2023  KR 20230163651**

(71) Applicant: **Samsung Electronics Co., Ltd.
Suwon-si, Gyeonggi-do 16677 (KR)**

(72) Inventors:
• **SHIM, Seijoon**
  **Suwon-si Gyeonggi-do 16677 (KR)**
• **KIM, Jonghwan**
  **Suwon-si Gyeonggi-do 16677 (KR)**
• **NAM, Eungkuk**
  **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **APPARATUS AND METHOD FOR TRANSMITTING DOWNLINK DATA ON BASIS OF FEEDBACK INFORMATION**

(57)    According to one embodiment, an apparatus of a base station comprises: a transceiver; a memory for storing instructions; and a processor. The instructions, when executed by the processor, cause the apparatus to transmit reference signals to a terminal. The instructions, when executed by the processor, cause the apparatus to receive, from the terminal, channel state information for the reference signals. The instructions, when executed by the processor, cause the apparatus to determine whether a first rank of a rank indicator included in the channel state information is greater than a threshold value. The instructions, when executed by the processor, cause the apparatus to generate first downlink data on the basis of a first precoding matrix corresponding to a second rank greater than the first rank when the first rank is greater than the threshold value.

FIG. 7

EP 4 783 480 A1

**Description**

**[Technical Field]**

The present disclosure relates to a device and a method for transmitting downlink data based on feedback information.

**[Background Art]**

In a wireless communication system, in a wireless mobile communication system, a scheme for demodulation and decoding of a data symbol may be configured through a state (or quality) of a channel between a base station and users, such as a signal strength or distortion of a signal of the channel, a strength of interference, and Gaussian noise. The base station may receive feedback information indicating a channel state from a terminal according to a reference signal. The base station may transmit downlink data based on the feedback information.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

According to an embodiment, a device of a base station may comprise a transceiver, memory storing instructions, and a processor. The instructions, when executed by the processor, may cause the device to transmit reference signals to a terminal. The instructions, when executed by the processor, may cause the device to receive, from the terminal, channel state information (CSI) related to the reference signals. The instructions, when executed by the processor, may cause the device to determine whether a first rank of a rank indicator comprised in the channel state information is greater than a threshold value. The instructions, when executed by the processor, may cause the device to, in a case that the first rank is greater than the threshold value, generate first downlink data based on a first precoding matrix corresponding to a second rank greater than the first rank. The instructions, when executed by the processor, may cause the device to, in a case that the first rank is less than or equal to the threshold value, generate second downlink data based on a second precoding matrix corresponding to the first rank.

According to an embodiment, a method performed by a device of a base station may comprise transmitting reference signals to a terminal. The method may comprise receiving, from the terminal, channel state information (CSI) related to the reference signals. The method may comprise determining whether a first rank of a rank indicator comprised in the channel state information is greater than a threshold value. The method may comprise, in a case that the first rank is greater than the threshold value, generating first downlink data based on a first precoding matrix corresponding to a second rank greater than the first rank. The method may comprise, in a case that the first rank is less than or equal to the threshold value, generating second downlink data based on a second precoding matrix corresponding to the first rank.

**[Description of the Drawings]**

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and a RU.
FIG. 5 illustrates an example in which data is transmitted from a base station to a terminal.
FIG. 6 is a flowchart for an operation of a base station.
FIG. 7 illustrates an example of an operation of a base station and a terminal.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a resource (e.g., symbol, slot, subframe, radio frame, subcarrier, resource element (RE), resource block (RB), bandwidth part (BWP), occasion) a term for a calculation state (e.g., step, operation, procedure), a term referring to data (e.g., packet, user stream, information, bit, symbol, codeword), a term referring to a channel, a term referring to a network entity, a term referring to a component of a device, and the like, that are used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

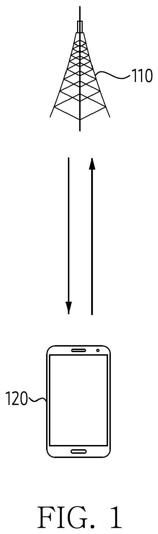

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE)', 'customer premises equipment, (CPE)', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

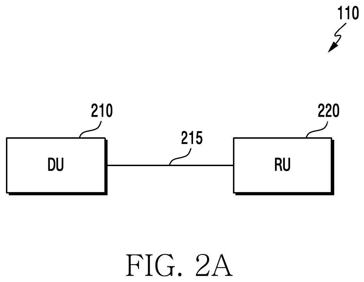

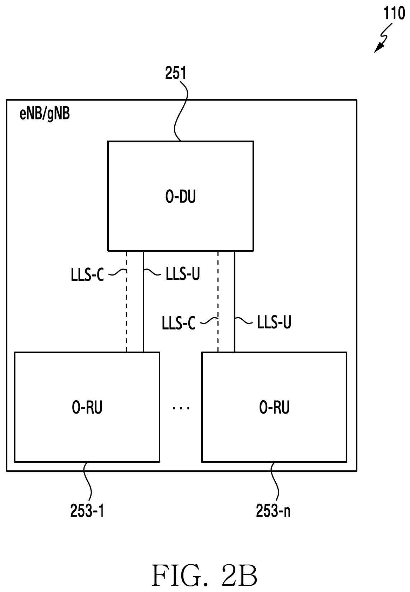

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes small, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

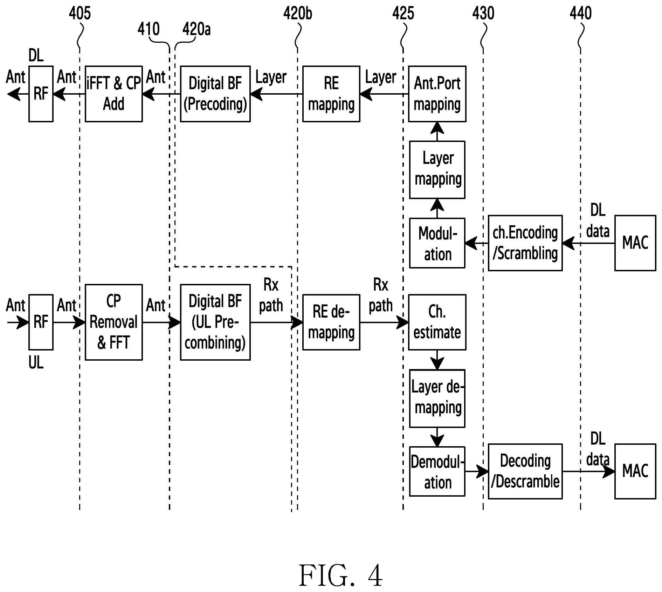

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), CP insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g.,

gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

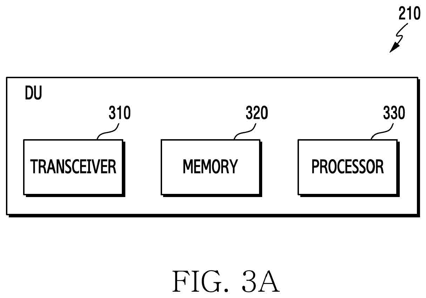

In FIG. 2B, entities of the base station 110 have been described as O-DU and O-RU to describe O-RAN. However, these designations are not to be construed as limiting the embodiments of the present disclosure. In embodiments described through FIGS. 3A to 15, operations of the DU 210 may also be performed by the O-DU 251. A description of the DU 210 may be applied to the O-DU 251. Likewise, in embodiments described through FIGS. 3A to 15, operations of the RU 220 may also be performed by the O-RU 253-1. A description of the RU 220 may be applied to the O-RU 253-1.

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

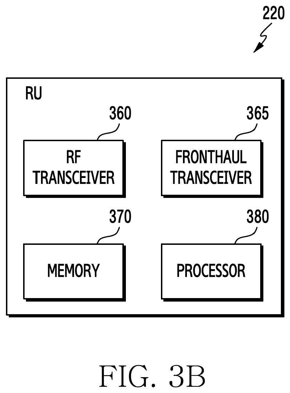

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

For example, a conventional base station is configured as a single unit, and is implemented such that a function regarding digital processing and a function regarding radio processing are performed together. For increasing cell coverage, a base station may be separated into a DU and an RU. The DU and the RU may be connected to each other through a wired network (e.g., an optic cable). The DU may be connected to one or more RUs located at various positions. Due to a limitation of a transmission capacity of the wired network (e.g., an optic cable) for connecting the DU and the RU, a function split in which some functions of the DU are implemented at the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a PDCP layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion, after performing an operation related to the PDCP layer, an operation related to the RLC layer, and an operation related to the MAC layer. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/-discrambling. After decoding/disclamping are performed, the base station may perform an operation related to the MAC layer, an operation related to the RLC layer, and an operation related to the PDCP layer. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6. As an example, the eighth function split 450 may be referred to as Option 4. As an example, the ninth function split 460 may be referred to as Option 2.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments, may be applied not only to the third function split 420a or the fourth function split 420b, but also to other function splits.

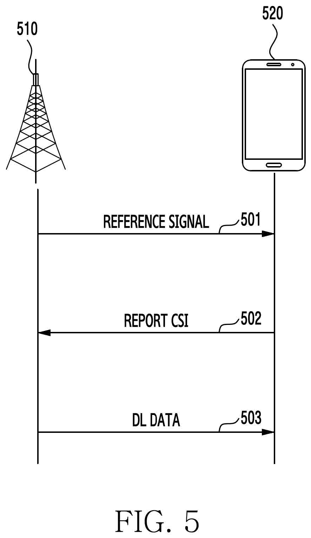

FIG. 5 illustrates an example in which data is transmitted from a base station to a terminal.

Referring to FIG. 5, in operation 501, a base station 510 may transmit a reference signal (e.g., a cell-specific reference signal (CRS), a channel state information-reference signal (CSI-RS), a synchronization signal block (SSB)) to a terminal 520. The base station 510 may transmit the reference signal to the terminal 520 in order to identify a state of a channel for a downlink. For example, the reference signal may be generated by applying a weight identified based on a pseudo random sequence. The base station 510 may transmit the generated reference signal to the terminal 520. According to an embodiment, the reference signal may be periodically transmitted or may be aperiodically transmitted.

In operation 502, the terminal 520 may report channel state information (CSI). For example, the terminal 520 may transmit the channel state information to the base station 510.

According to an embodiment, the CSI may include at least one of a rank indicator (RI), a precoding matrix indicator (PMI), and/or a channel quality indicator (CQI). For example, the rank indicator may indicate the number of layers recommended by the terminal 520 to use for downlink data transmission from the base station 510. The precoding matrix indicator may indicate a precoding matrix identified as suitable at the terminal 520 according to the rank indicator. The channel quality indicator may indicate a code rate and a modulation scheme identified as suitable according to the precoding matrix.

For example, the base station 510 and the terminal 520 may designate a set of precoding matrices based on a codebook in advance. The terminal 520 may identify a rank indicator, and may identify a precoding matrix within the set of precoding matrices based on the codebook based on the identified rank indicator. The terminal 520 may identify a precoding matrix indicator for the precoding matrix.

According to an embodiment, the codebook may be configured based on a plurality of antenna ports. The codebook may be configured based on antenna ports of not only a one-dimensional layout but also a multi-dimensional layout.

According to an embodiment, the terminal 520 may identify the channel quality indicator indicating the state of the channel for the downlink identified based on the reference signal. The channel quality indicator indicates an index (hereinafter, a channel quality indicator index) satisfying a designated condition, based on measurement of reference signals received from the base station 510. For example, the terminal 520 may determine the channel quality indicator index satisfying the designated condition among a plurality of channel quality indicator indices (e.g., indices of a channel quality indicator table stored in memory of the terminal 520). The terminal 520 may determine the channel quality indicator index indicating the modulation scheme and the code rate in which a block error rate (BLER) of a designated ratio (e.g., 10% in a case of an enhanced Mobile broadband (eMBB), 0.001% in a case of ultra-reliable and low latency communications (URLLC)) is not exceeded, when receiving data (e.g., a single physical downlink shared channel (PDSCH) block).

According to an embodiment, the terminal 520 may identify the state of the channel for the downlink based on the reference signal. The terminal 520 may determine signal quality in order to identify the state of the channel. In the present disclosure, the signal quality may be, for example, at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above-described examples, it is of course that other terms having an equivalent technical meaning or other metrics indicating channel quality may be used. Hereinafter, in the present disclosure, the signal quality being high means that a signal quality value related to signal magnitude is large or a signal quality value related to an error rate is small. As the signal quality is higher, it may mean that a smooth wireless communication environment is ensured.

According to an embodiment, the base station 510 may receive a CSI report. The base station 510 may obtain at least one of the rank indicator, the precoding matrix indicator, and/or the channel quality indicator based on the CSI report.

In operation 503, the base station 510 may transmit downlink data (DL data) (e.g., a transport block (TB) corresponding to a PDSCH) to the terminal 520.

According to an embodiment, the base station 510 may generate downlink data based on the channel state information received from the terminal 520. For example, the base station 510 may generate downlink data using the rank indicator and/or the precoding matrix indicator and may transmit the generated downlink data to the terminal 520.

Although not illustrated, the terminal 520 may transmit a response signal for the downlink data to the base station 510. The terminal 520 may perform decoding for the downlink data. The terminal 520 may generate the response signal based on a result of the decoding for the downlink data. The terminal 520 may transmit the response signal to the base station 510. The response signal may be set as one of a hybrid automatic repeat request (HARQ) acknowledgement (ACK) signal and a HARQ negative acknowledgement (NACK) signal.

According to the operation 501 to the operation 503, the channel state information may include channel information for increasing data reception performance of the terminal 520. The base station 510 may generate a precoding matrix using the precoding matrix indicator comprised in the channel state information. The base station 510 may obtain a signal to noise ratio (SNR) gain according to beam-forming by transmitting the downlink data to the terminal 520 based on the generated precoding matrix.

According to an embodiment, the reference signal may be configured based on a long term evolution (LTE) standard and a new radio (NR) standard. In the LTE standard, the reference signal may include a cell-specific reference signal (CRS). The cell-specific reference signal may be used as a demodulation reference signal (DMRS). Since the cell-specific reference signal is a signal used by all terminals in a cell, precoding may not be applied. Accordingly, the base station 510 may transmit precoding information applied to the downlink data to the terminal 520 using downlink control information (DCI).

On the other hand, in the NR standard, the identical precoding may be applied to the downlink data and the reference signal. The base station 510 may not transmit the precoding information to the terminal 520. The terminal 520 may estimate a channel in which an actual transmission channel and the precoding are combined as a transmission channel. The terminal 520 may demodulate data based on the transmission channel.

Both the LTE standard and the NR standard may transmit the downlink data using one of the precoding matrices defined between the base station 510 and the terminal 520. In the LTE standard, the terminal 520 may receive precoding information indicating a precoding matrix from the base station 510 using the downlink control information. However, in the NR standard, since the terminal 520 demodulates data without receiving the precoding information (or the precoding matrix), the base station 510 may transmit the downlink data based on another precoding matrix regardless of the channel state information (e.g., the precoding matrix indicator) transmitted by the terminal 520. The terminal 520 may demodulate data even when the downlink data is transmitted based on the another precoding matrix. However, since the base station 510 transmits the downlink data based on the another precoding matrix distinguished from the precoding matrix according to the precoding matrix indicator, a beamforming gain may be reduced. Accordingly, performance of the terminal 520 may be degraded.

According to an embodiment, the base station 510 may generate downlink data regardless of at least one of the rank indicator, the precoding matrix indicator, and/or the channel quality indicator included in the channel state information. The base station 510 may refer to the channel state information received from the terminal 520, but may not be limited by the channel state information received from the terminal 520. For example, the base station 510 may transmit the downlink data to the terminal 520 based on a precoding matrix corresponding to a rank smaller than a rank of the rank indicator received from the terminal 520. As an example, the base station 510 may transmit the downlink data to the terminal 520 based on the number of layers smaller than a rank value of the rank indicator.

Unlike the above-described embodiment, the base station 510 may transmit the downlink data to the terminal 520 based on a precoding matrix corresponding to a rank greater than the rank of the rank indicator received from the terminal. In a case that the base station 510 transmits the downlink data to the terminal 520 based on the precoding matrix corresponding to the rank greater than the rank of the rank indicator, even when the rank of the rank indicator is instantaneously lowered, a data transmission rate may be improved. Hereinafter, in the present specification, a technical feature for transmitting the downlink data to the terminal 520 based on the precoding matrix corresponding to the rank greater than the rank of the rank indicator received from the terminal will be described.

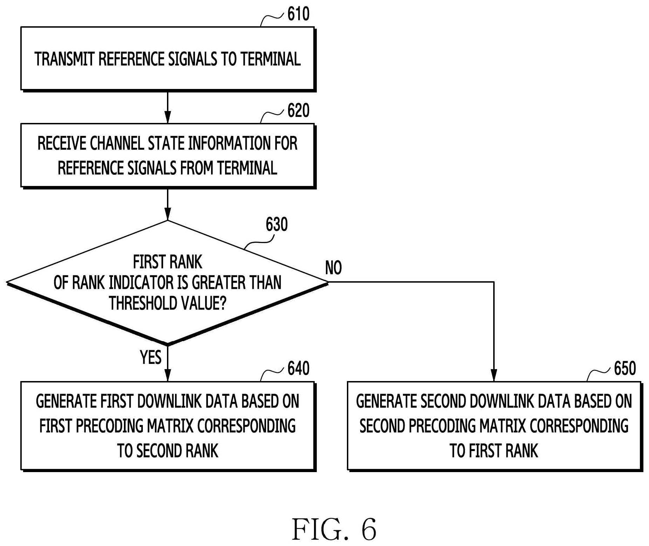

FIG. 6 is a flowchart for an operation of a base station.

Referring to FIG. 6, in operation 610, a base station 510 may transmit reference signals to a terminal 520. For example, the reference signals may include at least one of a channel state information-reference signal (CSI-RS), a cell-specific reference signal (CRS), or a synchronization signal block (SSB). The operation 610 may correspond to the operation 501 of FIG. 5.

In operation 620, the base station 510 may receive channel state information (CSI) for the reference signals from the terminal 520. For example, the base station 510 may receive the channel state information for the reference signals from the terminal 520 based on transmitting the reference signals to the terminal 520. For example, the channel state information for the reference signals may include at least one of a rank indicator (RI), a precoding matrix indicator (PMI), and/or a channel quality indicator (CQI). The rank indicator may correspond to the number of layers for downlink data proposed (or requested) by the terminal 520. The precoding matrix indicator may indicate a precoding matrix for generating the downlink data proposed (or requested) by the terminal 520. The precoding matrix indicator may indicate the precoding matrix based on a designated codebook. The channel quality indicator may indicate information for modulation or coding of the downlink data proposed (or requested) by the terminal 520.

In operation 630, the base station 510 may determine whether a first rank of the rank indicator is greater than a threshold value. For example, the base station 510 may determine whether the first rank of the rank indicator comprised in channel state information is greater than the threshold value.

For example, the base station 510 may identify the rank indicator comprised in the channel state information. The base station 510 may identify the first rank of the rank indicator. The base station 510 may determine whether the first rank is greater than the threshold value in order to generate the number of layers for the downlink data and the precoding matrix for the downlink data.

For example, the threshold value may be configured based on the following equation.

【Equation 1】

$$\mathrm{TH(n)} = (1 - \alpha)\mathrm{TH}(n-1) + \alpha\mathrm{RI}(n)$$

Referring to the Equation 1, n indicates an order of a slot. TH(n) indicates a threshold value of an n-th slot. TH(n-1) indicates a threshold value of an (n-1)-th slot. RI(n) indicates a rank of the n-th slot. $\alpha$ indicates a weight (or a blind factor). $\alpha$ may be set based on at least one of information on velocity of the terminal 520 or information on channel fading. $\alpha$ may be set to be equal to or greater than 0 and equal to or less than 1. The base station 510 may change a threshold value TH(n) based on at least one of the information on the velocity of the terminal or the information on the channel fading.

For example, TH(n) may be configured based on a cumulative value of ranks in a plurality of slots. Accordingly, as $\alpha$ is set to be greater, RI(n) is further accumulated, such that TH(n) may be determined.

According to an embodiment, the base station 510 may change the threshold value based on a second rank based on transmitting first downlink data to the terminal 520. The base station 510 may change the threshold value based on the Equation 1 described above.

In operation 640, in a case that the first rank is greater than the threshold value, the base station 510 may generate the first downlink data based on a first precoding matrix corresponding to the second rank. For example, in a case that the first rank is greater than the threshold value, the base station 510 may generate the first downlink data based on the first precoding matrix corresponding to the second rank greater than the first rank. The base station 510 may transmit the generated first downlink data to the terminal 520.

For example, the base station 510 may determine the second rank greater than the first rank based on the first rank greater than the threshold value. The base station 510 may generate (or identify) the first precoding matrix corresponding to the second rank. As an example, the base station 510 may generate (or identify) the first precoding matrix based on Equation 6 and Equation 7 described below. The base station 510 may determine (or identify) candidate precoding matrices ($\mathbf{P}_i (i \in \mathcal{A}_\mathbf{P}$ and $r > RI(n)$) described below) based on the second rank.

As an example, the base station 510 may determine a precoding matrix with the maximum channel capacity among the candidate precoding matrices as the first precoding matrix. As an example, the base station 510 may determine the first precoding matrix based on a product between a projection matrix of each of the candidate precoding matrices and a third precoding matrix of the precoding matrix indicator comprised in the channel state information. The base station 510 may determine the first precoding matrix based on a product between the projection matrix of each of the candidate precoding matrices and the third precoding matrix using the Equation 6 and the Equation 7 described below. The base station 510 may determine the first precoding matrix having the minimum distance from the third precoding matrix. The base station 510 may determine a precoding matrix having the minimum distance from the third precoding matrix as the first precoding matrix.

As an example, the base station 510 may store information on distances between a plurality of precoding matrices indicated by a codebook in memory. The information on the distances between the plurality of precoding matrices may be configured as a codebook distance table (e.g., Table 1) described below. The base station 510 may determine the first precoding matrix having the minimum distance from the third precoding matrix of the precoding matrix indicator comprised in the channel state information, based on the information on the distances between the plurality of precoding matrices. The base station 510 may determine the precoding matrix having the minimum distance from the third precoding matrix of the precoding matrix indicator comprised in the channel state information as the first precoding matrix, based on the information on the distances between the plurality of precoding matrices.

For example, the second rank may be the number of at least one layer for the first downlink data. The base station 510 may set the second rank as the number of at least one layer for the first downlink data. The second rank may correspond to the number of columns of the first precoding matrix.

In operation 650, in a case that the first rank is less than or equal to the threshold value, the base station 510 may generate second downlink data based on a second precoding matrix corresponding to the first rank. For example, in a case that the first rank is less than or equal to the threshold value, the base station 510 may generate the second downlink data based on the second precoding matrix corresponding to the first rank of the rank indicator. The base station 510 may transmit the generated second downlink data to the terminal 520.

According to an embodiment, the base station 510 may determine the precoding matrix of the precoding matrix indicator comprised in the channel state information as the second precoding matrix. The base station 510 may generate the second downlink data based on the second precoding matrix. According to an embodiment, in a case that the first rank is less than or equal to the threshold value, the base station 510 may generate the second downlink data based on a precoding matrix corresponding to a third rank less than or equal to the first rank.

According to an embodiment, based on transmitting the second downlink data to the terminal 520, the base station 510 may change the threshold value based on the first rank. The base station 510 may change the threshold value based on the Equation 1 described above.

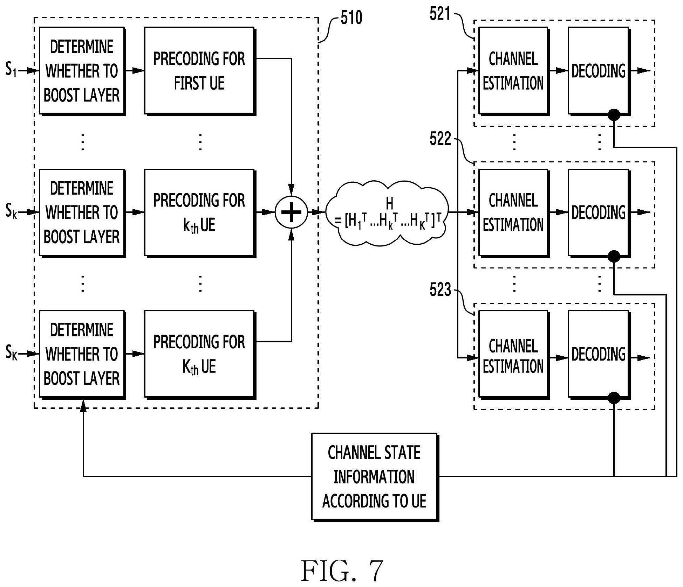

FIG. 7 illustrates an example of an operation of a base station and a terminal.

Referring to FIG. 7, a base station 510 may transmit reference signals to one or more UEs. The one or more UEs may transmit channel state information according to UE to the base station 510 based on the reference signals. For example, the one or more UEs may include a first UE 521, a $k^{th}$ UE 522, and a $K^{th}$ UE 523. The first UE 521, the $k^{th}$ UE 522, and the $K^{th}$ UE 523 may be examples of the terminal 520 described above. The first UE 521 may transmit first channel state information to the base station 510. The $k^{th}$ UE 522 may transmit $k^{th}$ channel state information to the base station 510. The $K^{th}$ UE 523 may transmit $K^{th}$ channel state information to the base station 510.

The base station 510 may transmit downlink data to the one or more UEs using the channel state information according to UE. The base station 510 may determine whether to boost(or float) a layer for each UE, and may transmit the downlink data to the one or more UEs by performing precoding based on whether to boost the layer. For example, the base station 510 may transmit downlink data for $s_1$ to the first UE 521. The base station 510 may transmit downlink data for $s_k$ to

the $k^{th}$ UE 522. The base station 510 may transmit downlink data for $s_K$ to the $K^{th}$ UE 523. Hereinafter, for convenience of description, an operation for transmitting the downlink data to the $k^{th}$ UE 522 will be described.

For example, the base station 510 may obtain $k^{th}$ channel state information of the $k^{th}$ UE 522. The base station 510 may obtain at least one of a rank indicator, a precoding matrix indicator, and/or a channel quality indicator of the $k^{th}$ channel state information. The base station 510 may determine whether to boost a layer based on at least one of the rank indicator, the precoding matrix indicator, and/or the channel quality indicator. Determining whether to boost the layer may mean determining whether to generate a precoding matrix corresponding to a rank greater than a rank (or a first rank) of the rank indicator.

The base station 510 may determine a threshold value based on a history for a rank. The base station 510 may determine whether the rank of the rank indicator is greater than the threshold value. In a case that the rank of the rank indicator is greater than the threshold value, the base station 510 may generate downlink data based on a precoding matrix corresponding to a rank greater than the rank of the rank indicator. In a case that the rank of the rank indicator is less than or equal to the threshold value, the base station 510 may generate downlink data based on a precoding matrix corresponding to the rank of the rank indicator.

For example, in an environment in which velocity of the $k^{th}$ UE 522 is slow or is in a fixed state, in a case that the precoding matrix indicator is changed or the rank of the rank indicator is lowered, the base station 510 may lower reliability of the $k^{th}$ channel state information received from the $k^{th}$ UE 522. The base station 510 may determine (or generate) a precoding matrix regardless of the rank of the rank indicator comprised in the $k^{th}$ channel state information. The base station 510 may transmit downlink data to the $k^{th}$ UE 522 based on the generated precoding matrix. The $k^{th}$ UE 522 may estimate $\widehat{\mathbf{H}_k \mathbf{P}_k}(n)$ in which $\mathbf{H}_k(n)$ which is channel information of an n-th slot and precoding $\mathbf{P}_k(n)$ are combined, through channel estimation. The $k^{th}$ UE 522 may perform decoding of the downlink data based on $\widehat{\mathbf{H}_k \mathbf{P}_k}(n)$.

Hereinafter, the $k^{th}$ UE 522 may obtain channel information ($\tilde{\mathbf{H}}_k(n)$) to which precoding is not applied based on a reference signal (e.g., a channel state information-reference signal (CSI-RS)). According to an embodiment, in an LTE standard, the base station 510 may obtain the channel information (($\tilde{\mathbf{H}}_k(n)$) to which the precoding is not applied based on a cell-specific reference signal (CRS). The $k^{th}$ UE 522 may obtain a rank indicator and a precoding matrix indicator of the n-th slot (or a subframe) using Equation 2.

【Equation 2】

$$(RI(n), PMI(n)) = f\left(\tilde{\mathbf{H}}_k(n)\right)$$

Referring to the Equation 2, $RI(n)$ is the rank indicator of the n-th slot. $PMI(n)$ is the precoding matrix indicator of the n-th slot. $f(\cdot)$ is a mapping function for obtaining a rank indicator and a precoding matrix indicator according to the channel information to which the precoding is not applied. For example, $f(\cdot)$ may be configured to select (or identify, determine) a $\mathbf{P}(ri(n), pmi(n)))$ with the maximum channel capacity and/or signal to interference and noise ratio (SINR). The $k^{th}$ UE 522 may select (or identify, determine) the codebook ($\mathbf{P}(ri(n), pmi(n)))$ with the maximum channel capacity based on Equation 3 below. The $k^{th}$ UE 522 may select (or identify, determine) the codebook ($\mathbf{P}(ri(n), pmi(n)))$ with the maximum signal to interference and noise ratio (SINR) based on Equation 4 below.

【Equation 3】

$$(RI(n), PMI(n)) = \arg \max_{\substack{ri(n)\in\mathcal{A}_{ri} \\ and \\ pmi(n)\in\mathcal{A}_{pmi}}} \log \det\left(\mathbf{I} + \mathbf{P}\left(ri(n), pmi(n)\right)^{\mathbf{H}} \tilde{\mathbf{H}}_k(n)\right)$$

【Equation 4】

$$(RI(n), PMI(n)) = \arg \max_{\substack{ri(n)\in\mathcal{A}_{ri} \\ and \\ pmi(n)\in\mathcal{A}_{pmi}}} \sum_{l}^{ri(n)} \left[\left(\mathbf{P}^{\mathbf{H}}\left(ri(n), pmi(n)\right)\tilde{\mathbf{H}}_k(n)\tilde{\mathbf{H}}_k^{\mathbf{H}}(n)\mathbf{P}\left(ri(n), pmi(n)\right) + \sigma_n^2\mathbf{I}\right)^{-1}\right]_{l,l}$$

Referring to the Equation 3 and the Equation 4, $ri(n)$ is an element of a set $A_{ri}$ of rank indicators. $pmi(n)$ is an element of a set $A_{pmi}$ of precoding matrix indicators. Argmax is an operator indicating an input value for outputting the maximum value. $\sigma_n^2 \mathbf{I}$ is a covariance matrix of estimated noise and interference components.

Using one of the Equation 3 and the Equation 4, UE may obtain (or identify, confirm) a codebook (or a precoding matrix) ($\mathbf{P}(n) = \mathbf{P}(RI(n), PMI(n))$) with the maximum channel capacity and/or the SINR of the n-th slot, which is a current slot. The codebook (or the precoding matrix) ($\mathbf{P}(n) = \mathbf{P}(RI(n), PMI(n))$) may have magnitude of $n_T \times RI(n)$. $n_T$ is the number of transmit antennas of the base station 510.

A codebook set ($\mathcal{A}_\mathbf{P}$) for $\mathbf{P}(n)$ may be defined by Equation 5 described below.

【Equation 5】

$$\mathcal{A}_\mathbf{P} = g\left(\mathcal{A}_{ri}, \mathcal{A}_{pmi}\right)$$

Referring to the Equation 5, $g(.)$ is an index mapping function. The set $A_\mathbf{P}$ may be indexed from 0 to card($A_\mathbf{P}$)-1. card($A_\mathbf{P}$)-1 is a cardinality of the set $A_\mathbf{P}$.

According to an embodiment, UE (e.g., the kth UE 522) may obtain a rank, a precoding matrix, and/or a code rate and a modulation scheme according to channel quality of the n-th slot through a channel according to the Equation 3 and/or the Equation 4. The UE may transmit quantized information to the base station 510 based on the rank, the precoding matrix, and/or the code rate and the modulation scheme according to the channel quality of the n-th slot. The UE may transmit \RI(n) indicating the rank of the n-th slot to the base station 510. The terminal may transmit $PMI(n)$ indicating the precoding matrix of the n-th slot to the base station 510. The terminal may transmit $CQI(n)$ indicating the code rate and the modulation scheme according to the channel quality of the n-th slot to the base station 510.

The base station 510 may determine (or identify) that reliability of $RI(n)$, $PMI(n)$, and/or $CQI(n)$ is lower than reference reliability. The base station 510 may increase magnitude of transmission layers through layer boosting (or rank boosting). For example, the base station 510 may determine (or identify) a codebook (or a precoding matrix) $\mathbf{P}_b$ having the maximum correlation based on the codebook (or the precoding matrix) $\mathbf{P}(n)$.

For example, the base station 510 may check (or identify, determine) correlation information $\rho_i(n)$. The correlation information may be checked (or identified, determined) based on a distance between matrices. The base station 510 may check (or identify, determine) $\mathbf{P}_i (i \in A_\mathbf{P}$ and $r > RI(n))$ which are matrices (or a set of the matrices) having a rank r greater than $RI(n)$ received from the UE among all precoding matrices comprised in the set $A_\mathbf{P}$. The base station 510 may check (or identify, determine) $\mathbf{P}_b$ having the minimum matrix distance between $\mathbf{P}(n)$ and $\mathbf{P}_i (i \in A_\mathbf{P}$ and $r > RI(n))$. The base station 510 may check (or identify, determine) $\mathbf{P}_b$ using Equation 6 and Equation 7.

【Equation 6】

$$\rho_i(n) = \alpha \cdot \text{sum}\left(\text{abs}\left(\text{diag}\left(\left(\mathbf{P}_i^{\text{H}}\mathbf{P}_i\right)^{-1}\mathbf{P}_i^{\text{H}}\mathbf{P}(n)\right)\right)\right)$$

【Equation 7】

$$b = \arg\max_{\substack{i \in \mathcal{A}_\mathbf{P} \\ and \\ r > RI(n)}} \rho_i(n)$$

Referring to the Equation 6 and the Equation 7, r is a rank of the rank indicator $RI(n)$ (or the rank according to the rank indicator). sum(.) is a summation operator. abs(.) is an absolute value operator. diag(.) is an operator for extracting diagonal components of a matrix. Argmax is an operator indicating an input value for outputting the maximum value. For example, argmax indicates an index value for outputting the maximum value of $\rho_i(n)$. $\alpha$ is a rank correction exponent. $\alpha$ may be configured as in Equation 8.

【Equation 8】

$$\alpha = \frac{\sqrt{RI(n)}}{\sqrt{r}}$$

A distance value between the matrices identified (or calculated) through the Equation 6 and the Equation 7 may be identified based on a matrix projection. $\rho(n)$ may be directly calculated in a case that capacity of a processor is large, however, magnitude of the set $A_\mathbf{P}$ (that is, card($A_\mathbf{P}$)) may be limited according to a shape of the transmit antenna. Therefore, a codebook distance table in which $\rho(n)$ is pre-calculated according to a shape of a Tx antenna and a type of a codebook may be used. The codebook distance table may be configured as in Table 1 below.

[Table 1]

| codebook index | 0 | 1 | 2 | ⋯ | card($\mathcal{A}_\mathbf{P}$)-2 | card($\mathcal{A}_\mathbf{P}$)-1 |
|---|---|---|---|---|---|---|
| 0 | $\rho_{0,0}$ | $\rho_{0,1}$ | $\rho_{0,2}$ | ⋯ | $\rho_{0,card(AP)-2}$ | $\rho_{0,card(AP)-1}$ |
| 1 | $\rho_{1,0}$ | $\rho_{1,1}$ | $\rho_{1,2}$ | ⋯ | $\rho_{1,card(A(AP)-2}$ | $\rho_{1,card(AP)-1}$ |
| 2 | $\rho_{2,0}$ | $\rho_{2,1}$ | $\rho_{2,2}$ | ⋯ | $\rho_{2,card(A(AP)-2}$ | $\rho_{2,card(AP)-1}$ |
| ⋮ | ⋮ | ⋮ | ⋮ | ⋱ | ⋮ | ⋮ |
| card($\mathcal{A}_\mathbf{P}$)-2 | $\rho_{card(AP)-2,0}$ | $\rho_{card(AP)-2,1}$ | $\rho_{card(AP)-2,2}$ | ⋯ | $\rho_{card(AP)-2,card(AP)-2}$ | $\rho_{card(AP)-2,card(AP)-1}$ |
| card($\mathcal{A}_\mathbf{P}$)-1 | $\rho_{card(AP)-1,0}$ | $\rho_{card(AP)-1,1}$ | $\rho_{card(AP)-1,2}$ | ⋯ | $\rho_{card(AP)-1,card(AP)-2}$ | $\rho_{card(AP)-1,card(AP)-1}$ |

Referring to the Table 1, distances between precoding matrices according to a codebook index may be configured as in the Table 1. $\rho_{i,j}$ may be configured as in Equation 9.

【Equation 9】

$$\rho_{i,j} = \alpha_{i,j} \cdot sum\left(\mathrm{diag}\left(\left(\mathbf{P}_i^H \mathbf{P}_i\right)^{-1} \mathbf{P}_i^H \mathbf{P}_j\right)\right) \; for \; i \; and \; j \; \in \; card(\mathcal{A}_\mathbf{P})$$

Referring to the Equation 9, $r_i$ is a rank of the precoding matrix $\mathbf{P}_i$ comprised in the set $A_\mathbf{P}$. $r_j$ is a rank of the precoding matrix $\mathbf{P}_j$ included in the set $A_\mathbf{P}$. card(.) is an operator indicating magnitude of a set. $\alpha_{i,j}$ may be configured as in Equation 10.

【Equation 10】

$$\alpha_{i,j} = \frac{\sqrt{r_j}}{\sqrt{r_i}}$$

Referring to the Table 1 described above, $\rho_{l,m}$ and $\rho_{m,l}$ may be identical according to a characteristic of matrix projection. Therefore, the Table 1 may be changed (or configured) based on one of lower triangular and/or upper triangular. As the Table 1 is changed (or configured) based on one of the lower triangular and/or the upper triangular, magnitude of memory for storing the Table 1 may be reduced.

According to an embodiment, in the LTE standard and an NR standard, various types of codebooks are provided. A codebook may be used to feedback a state of a channel for downlink data received by UE (e.g., the first UE 521, the $k^{th}$ UE 522, or the $K^{th}$ UE 523) to the base station 510. For example, in the NR standard, based on a shape of an antenna of the base station 510, a Type I codebook and a Type II codebook may be used. The Type I codebook may include a single panel codebook and a multi-panel codebook. The Type II codebook may include a port selection codebook and an enhanced codebook.

For example, the Type II codebook may be configured to increase a resolution of channel feedback to feedback an accurate channel state. In the Type II codebook, an enhanced Type II codebook, and a further enhanced Type II codebook, in a case that the distances between the precoding matrices are calculated (or identified) as in the Table 1 described above, more than 100 million combinations may occur. Therefore, in the Type II codebook, in a case that the distances between the precoding matrices are respectively calculated (or identified) as in the Table 1 described above, magnitude of the table may be configured to be too large.

As an example, in order to reduce the magnitude of the table indicating the distances between the precoding matrices, a codebook to be applied may be limited based on codebook restriction. For example, in a case that codebook restriction is applied, the number of precoding matrices of a codebook applied according to an antenna shape may be limited. Therefore, the magnitude of the table indicating the distances between the precoding matrices may be limited.

As an example, in order to reduce the magnitude of the table indicating the distances between the precoding matrices, an implementation structure of the Type II codebook of the NR standard may be utilized. As described above, in a case that the Type II codebook of the NR standard is used, by increasing the resolution of the channel feedback, precise codebook information close to an actual channel may be fed back. The Type II codebook of the NR standard may be configured as a power combination of a strong beam and a weak beam. Since a codebook distance table quantifies and indicates similarity between codebooks (or precoding matrices), the codebook distance table may be configured based on information on a wideband beam corresponding to the strong beam. The base station 510 may receive information on the wideband beam, and may approximate it through codebook projection. Since the number of codebooks having the strong beam is limited according to a shape of an antenna and a rank, the codebook distance table may be pre-calculated (or identified, configured).

The UE may obtain the information on the wideband beam using estimated subband channels. The UE may obtain subband channel information $\hat{\mathbf{H}}_i$ having magnitude of $n_R \times n_T$. $n_R$ indicates the number of receive antennas of the UE. $n_T$ indicates the number of transmit antennas of the base station 510. i indicates a subband index.

The UE may obtain a wideband channel correlation matrix $\mathbf{C}_H$ by cumulatively averaging channel information $\mathbf{H}_i$ estimated in each subband. The wideband channel correlation matrix $\mathbf{C}_H$ may be obtained based on Equation 11.

【Equation 11】

$$\mathbf{C}_H = \left(\frac{1}{N_{\text{sub}}}\right) \Sigma \, \widehat{\mathbf{H}_i}^{\mathbf{H}} \widehat{\mathbf{H}}_i$$

Referring to the Equation 11, $N_{\text{sub}}$ indicates the number of subbands. The UE may perform eigen decomposition on the wideband channel correlation matrix $\mathbf{C}_H$, and may obtain the information on the wideband beam using a rank reduction and selection process. For example, the UE may perform the operations described above using Equation 12.

【Equation 12】

$$\text{eigen}(\mathbf{C}_H) = \mathbf{U}_{\mathbf{wb}} \cdot \Lambda_{\mathbf{wb}} \cdot \mathbf{U}_{\mathbf{wb}}^{H}$$

Referring to the Equation 12, eigen(.) is an operator for eigen decomposition. $\Lambda_{\text{wb}}$ is an eigenvalue matrix having magnitude o$N_T \times N_T$. $\mathbf{U}_{\text{wb}}$ is an eigen matrix vector corresponding to the wideband beam. The UE may obtain the information on the wideband beam (e.g., a rank indicator or a precoding matrix indicator) using $\mathbf{U}_{\text{wb}}$. The base station 510 may generate (or determine) a precoding matrix using the codebook distance table based on the information on the wideband beam.

According to an embodiment, a device of a base station may comprise a transceiver, at least one processor comprising processing circuitry, and memory comprising one or more storage media storing instructions. The instructions, when executed by the processor, may cause the device to transmit reference signals to a terminal. The instructions, when executed by the at least one processor individually or collectively, may cause the device to receive, from the terminal, channel state information (CSI) related to the reference signals. The instructions, when executed by the at least one processor individually or collectively, may cause the device to determine whether a first rank of a rank indicator comprised in the channel state information is greater than a threshold value. The instructions, when executed by the at least one processor individually or collectively, may cause the device to, in a case that the first rank is greater than the threshold value, generate first downlink data based on a first precoding matrix corresponding to a second rank greater than the first rank. The instructions, when executed by the at least one processor individually or collectively, may cause the device to, in a case that the first rank is less than or equal to the threshold value, generate second downlink data based on a second precoding matrix corresponding to the first rank.

For example, the instructions, when executed by the at least one processor individually or collectively, may cause the device to change the threshold value based on transmitting one of the first downlink data and the second downlink data to the terminal.

For example, the instructions, when executed by the at least one processor individually or collectively, may cause the device to transmit the first downlink data to the terminal. The instructions, when executed by the at least one processor individually or collectively, may cause the device to change the threshold value based on the second rank.

For example, the instructions, when executed by the at least one processor individually or collectively, may cause the device to transmit the second downlink data to the terminal. The instructions, when executed by the at least one processor individually or collectively, may cause the device to change the threshold value based on the first rank.

For example, the instructions, when executed by the at least one processor individually or collectively, may cause the device to change the threshold value based on at least one of information on velocity of the terminal or information on channel fading.

For example, the instructions, when executed by the at least one processor individually or collectively, may cause the device to, in a case that the first rank is greater than the threshold value, determine candidate precoding matrices based on the second rank. The instructions, when executed by the at least one processor individually or collectively, may cause the device to determine a precoding matrix with the maximum channel capacity among the candidate precoding matrices as the first precoding matrix.

For example, the instructions, when executed by the at least one processor individually or collectively, may cause the device to determine the first precoding matrix based on a product between a projection matrix of each of the candidate precoding matrices and a third precoding matrix of a precoding matrix indicator comprised in the channel state information.

For example, the memory may store information on distances between a plurality of precoding matrices indicated by a codebook. The instructions, when executed by the at least one processor individually or collectively, may cause the device to determine, based on the information on the distances between the plurality of precoding matrices, the first precoding matrix having the minimum distance from the third precoding matrix of the precoding matrix indicator comprised in the channel state information.

For example, the first rank may be the number of at least one layer related to the second downlink data. The second rank may be the number of at least one layer related to the first downlink data.

For example, the reference signals may comprise at least one of a channel state information-reference signal (CSI-RS), a cell-specific reference signal (CRS), or a synchronization signal block (SSB).

According to an embodiment, a method performed by a device of a base station may comprise transmitting reference signals to a terminal. The method may comprise receiving, from the terminal, channel state information (CSI) related to the reference signals. The method may comprise determining whether a first rank of a rank indicator comprised in the channel state information is greater than a threshold value. The method may comprise, in a case that the first rank is greater than the threshold value, generating first downlink data based on a first precoding matrix corresponding to a second rank greater than the first rank. The method may comprise, in a case that the first rank is less than or equal to the threshold value, generating second downlink data based on a second precoding matrix corresponding to the first rank.

For example, the method may comprise changing the threshold value based on transmitting one of the first downlink data and the second downlink data to the terminal.

For example, the method may comprise transmitting the first downlink data to the terminal. The method may comprise changing the threshold value based on the second rank.

For example, the method may comprise transmitting the second downlink data to the terminal. The method may comprise changing the threshold value based on the first rank.

For example, the method may comprise changing the threshold value based on at least one of information on velocity of the terminal or information on channel fading.

For example, the method may comprise, in a case that the first rank is greater than the threshold value, determining candidate precoding matrices based on the second rank. The method may comprise determining a precoding matrix with the maximum channel capacity among the candidate precoding matrices as the first precoding matrix.

For example, the method may comprise determining the first precoding matrix based on a product between a projection matrix of each of the candidate precoding matrices and a third precoding matrix of a precoding matrix indicator comprised in the channel state information.

For example, the method may comprise determining, based on information on distances between a plurality of precoding matrices indicated by a codebook, the first precoding matrix having the minimum distance from the third precoding matrix of the precoding matrix indicator comprised in the channel state information.

For example, the first rank may be the number of at least one layer related to the second downlink data. The second rank may be the number of at least one layer related to the first downlink data.

For example, the reference signals may comprise at least one of a channel state information-reference signal (CSI-RS), a cell-specific reference signal (CRS), or a synchronization signal block (SSB).

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A device of a base station comprising:

   a transceiver;
   at least one processor comprising processing circuitry; and
   memory comprising one or more storage media storing instructions,
   wherein the instructions, when executed by the at least one processor individually or collectively, cause the device to:

   transmit reference signals to a terminal,
   receive, from the terminal, channel state information (CSI) related to the reference signals,
   determine whether a first rank of a rank indicator comprised in the channel state information is greater than a threshold value,
   in a case that the first rank is greater than the threshold value, generate first downlink data based on a first precoding matrix corresponding to a second rank greater than the first rank, and
   in a case that the first rank is less than or equal to the threshold value, generate second downlink data based on a second precoding matrix corresponding to the first rank.

2. The device of claim 1, wherein the instructions, when executed by the at least one processor individually or collectively, further cause the device to change the threshold value based on transmitting one of the first downlink data and the second downlink data to the terminal.

3. The device of claim 2, wherein the instructions, when executed by the at least one processor individually or collectively, further cause the device to:

transmit the first downlink data to the terminal, and
change the threshold value based on the second rank.

4. The device of claim 2, wherein the instructions, when executed by the at least one processor individually or collectively, further cause the device to:

transmit the second downlink data to the terminal, and
change the threshold value based on the first rank.

5. The device of claim 2, wherein the instructions, when executed by the at least one processor individually or collectively, further cause the device to change the threshold value based on at least one of information on velocity of the terminal or information on channel fading.

6. The device of claim 1, wherein the instructions, when executed by the at least one processor individually or collectively, further cause the device to:

in a case that the first rank is greater than the threshold value, determine candidate precoding matrices based on the second rank, and
determine a precoding matrix with the maximum channel capacity among the candidate precoding matrices as the first precoding matrix.

7. The device of claim 6, wherein the instructions, when executed by the at least one processor individually or collectively, further cause the device to determine the first precoding matrix based on a product between a projection matrix of each of the candidate precoding matrices and a third precoding matrix of a precoding matrix indicator comprised in the channel state information.

8. The device of claim 1, wherein the memory stores information on distances between a plurality of precoding matrices indicated by a codebook, and
wherein the instructions, when executed by the at least one processor, further cause the device to determine, based on the information on the distances between the plurality of precoding matrices, the first precoding matrix having the minimum distance from the third precoding matrix of the precoding matrix indicator comprised in the channel state information.

9. The device of claim 1, wherein the first rank is the number of at least one layer related to the second downlink data, and
wherein the second rank is the number of at least one layer related to the first downlink data.

10. The device of claim 1, wherein the reference signals comprise at least one of a channel state information-reference signal (CSI-RS), a cell-specific reference signal (CRS), or a synchronization signal block (SSB).

11. A method performed by a device of a base station, comprising:

transmitting reference signals to a terminal,
receiving, from the terminal, channel state information (CSI) related to the reference signals,
determining whether a first rank of a rank indicator comprised in the channel state information is greater than a threshold value,
in a case that the first rank is greater than the threshold value, generating first downlink data based on a first precoding matrix corresponding to a second rank greater than the first rank, and
in a case that the first rank is less than or equal to the threshold value, generating second downlink data based on a second precoding matrix corresponding to the first rank.

12. The method of claim 11, wherein the method further comprises changing the threshold value based on transmitting one of the first downlink data and the second downlink data to the terminal.

**13.** The method of claim 12, wherein the method further comprises:

transmitting the first downlink data to the terminal, and
changing the threshold value based on the second rank.

**14.** The method of claim 12, wherein the method further comprises:

transmitting the second downlink data to the terminal, and
changing the threshold value based on the first rank.

**15.** The method of claim 12, wherein the method further comprises changing the threshold value based on at least one of information on velocity of the terminal or information on channel fading.

FIG. 1

110

210

DU

215

220

RU

FIG. 2A

FIG. 2B

210

| DU | | |
|---|---|---|
| 310 | 320 | 330 |
| TRANSCEIVER | MEMORY | PROCESSOR |

FIG. 3A

FIG. 3B

FIG. 4

FIG. 5

610

TRANSMIT REFERENCE SIGNALS TO TERMINAL

620

RECEIVE CHANNEL STATE INFORMATION FOR
REFERENCE SIGNALS FROM TERMINAL

630

FIRST RANK
OF RANK INDICATOR IS GREATER THAN
THRESHOLD VALUE?

NO

YES

640

GENERATE FIRST DOWNLINK DATA BASED ON
FIRST PRECODING MATRIX CORRESPONDING
TO SECOND RANK

650

GENERATE SECOND DOWNLINK DATA BASED ON
SECOND PRECODING MATRIX CORRESPONDING
TO FIRST RANK

FIG. 6

FIG. 7

## INTERNATIONAL SEARCH REPORT

| International application No. |
| --- |
| **PCT/KR2024/014796** |

| A. | CLASSIFICATION OF SUBJECT MATTER |
| --- | --- |

**H04B 7/0456**(2017.01)i; **H04B 7/06**(2006.01)i; **H04W 72/1273**(2023.01)i; **H04W 64/00**(2009.01)i; **H04L 5/00**(2006.01)i

According to International Patent Classification (IPC) or to both national classification and IPC

| B. | FIELDS SEARCHED |
| --- | --- |

Minimum documentation searched (classification system followed by classification symbols)

H04B 7/0456(2017.01); H04B 7/06(2006.01); H04B 7/08(2006.01); H04L 1/00(2006.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 랭크 지시자(rank indicator), 임계값(threshold value), 프리코딩 행렬(precoding matrix), 하향링크 데이터(downlink data)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2018-0076943 A1 (SAMSUNG ELECTRONICS CO., LTD.) 15 March 2018 (2018-03-15)<br>See paragraphs [0040]-[0193]; and figures 2-3. | 1-15 |
| A | WO 2023-010458 A1 (APPLE INC.) 09 February 2023 (2023-02-09)<br>See paragraphs [0034]-[0109]; and figures 1-4. | 1-15 |
| A | US 2023-0318671 A1 (MAVENIR NETWORKS, INC.) 05 October 2023 (2023-10-05)<br>See paragraphs [0019]-[0179]; and figures 1-2. | 1-15 |
| A | CN 116505993 A (JIXIN COMMUNICATION TECHNOLOGY (NANJING) CO., LTD. et al.) 28 July 2023 (2023-07-28)<br>See claims 1-7. | 1-15 |
| A | WO 2023-280420 A1 (TELEFONAKTIEBOLAGET LM ERICSSON (PUBL)) 12 January 2023 (2023-01-12)<br>See paragraphs [0044]-[0063]; and figures 2-3. | 1-15 |

[ ] Further documents are listed in the continuation of Box C.    [✓] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 January 2025** | **20 January 2025** |

| Name and mailing address of the ISA/KR | Authorized officer |
| --- | --- |
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014796**

| Patent document cited in search report | | | Publication date (day/month/year) | Patent family member(s) | | | Publication date (day/month/year) |
|---|---|---|---|---|---|---|---|
| US | 2018-0076943 | A1 | 15 March 2018 | CN | 103125083 | A | 29 May 2013 |
| | | | | CN | 103125083 | B | 20 April 2016 |
| | | | | EP | 2622758 | A1 | 07 August 2013 |
| | | | | EP | 2622758 | B1 | 14 June 2017 |
| | | | | KR | 10-1752824 | B1 | 30 June 2017 |
| | | | | KR | 10-2012-0033215 | A | 06 April 2012 |
| | | | | US | 10469237 | B2 | 05 November 2019 |
| | | | | US | 2012-0106470 | A1 | 03 May 2012 |
| | | | | US | 2015-0172033 | A1 | 18 June 2015 |
| | | | | US | 8948104 | B2 | 03 February 2015 |
| | | | | US | 9800388 | B2 | 24 October 2017 |
| | | | | WO | 2012-044080 | A1 | 05 April 2012 |
| WO | 2023-010458 | A1 | 09 February 2023 | CN | 117678163 | A | 08 March 2024 |
| | | | | EP | 4364309 | A1 | 08 May 2024 |
| | | | | US | 11984948 | B2 | 14 May 2024 |
| | | | | US | 2024-0014865 | A1 | 11 January 2024 |
| | | | | US | 2024-0063855 | A1 | 22 February 2024 |
| US | 2023-0318671 | A1 | 05 October 2023 | EP | 4256880 | A1 | 11 October 2023 |
| | | | | EP | 4256880 | A4 | 23 October 2024 |
| | | | | WO | 2022-116069 | A1 | 09 June 2022 |
| CN | 116505993 | A | 28 July 2023 | CN | 116505993 | B | 24 October 2023 |
| WO | 2023-280420 | A1 | 12 January 2023 | BR | 112022006936 | A2 | 28 June 2022 |
| | | | | DE | 102019215615 | A1 | 15 April 2021 |
| | | | | EP | 4041412 | A1 | 17 August 2022 |
| | | | | EP | 4041412 | B1 | 24 April 2024 |
| | | | | US | 2024-0091130 | A1 | 21 March 2024 |
| | | | | WO | 2021-069126 | A1 | 15 April 2021 |

Form PCT/ISA/210 (patent family annex) (July 2022)